# NEW EUROPEAN PATENT SPECIFICATION

(11) **EP 3 277 759 B2**
(45) Date of publication and mention of the opposition decision: **24.11.2021**
(45) Mention of the grant of the patent: 27.02.2019
(21) Application number: 16719580.9
(22) Date of filing: 28.03.2016
(51) Int. Cl.: C09D 7/61, C09D 7/00, C08K 3/04, C08K 3/22, C08K 3/34, E04F 15/10, E04B 1/66, C09D 7/40

(54) **SCRATCH RESISTANT COATING COMPOSITION WITH A COMBINATION OF HARD PARTICLES**
KRATZFESTE BESCHICHTUNGSZUSAMMENSETZUNG MIT EINER KOMBINATION AUS HARTPARTIKELN
COMPOSITION DE REVÊTEMENT RÉSISTANTE AUX ÉGRATIGNURES PRÉSENTANT UNE COMBINAISON DE PARTICULES DURES

(30) Priority: 03.04.2015 US 201514678183
(43) Date of publication of application: 07.02.2018
(73) Proprietor: Armstrong World Industries, Inc., Lancaster, PA 17604-3001 (US)
(72) Inventor: TIAN, Dong, Lancaster, Pennsylvania 17601 (US); ROSS, Jeffrey S., Lancaster, Pennsylvania 17603 (US)
(74) Representative: Jenkins, Peter David
(86) International application number: PCT/US2016/024451
(87) International publication number: WO 2016/160666

(56) References cited:
- EP-A1- 1 068 083
- JP-A- 2006 322 188
- US-A1- 2001 051 229
- US-B1- 6 291 078

## Description

### FIELD OF INVENTION

Embodiments of the present invention relate to an abrasion resistant coating for flooring tiles and panels, methods for preparing and applying the abrasion resistant coating, and flooring systems comprising the abrasion resistant coating.

### BACKGROUND

Heretofore, curable coating compositions have been used as overcoat materials to cover the surface of flooring products or various abrasion heavy surfaces to protect such a products or surfaces from damage by abrasion or scratch. However, previous attempts at creating abrasion resistant coatings have required large amounts of abrasion resistant particle - namely only aluminum oxide - and have failed to appreciate a combination of hard particles as well as the size distribution of abrasion resistant particles, thereby leading to inefficient usage of abrasion resistant filler in coatings.

### SUMMARY

The present invention provides a floor covering according to claim 1, a floor covering according to claim 9 and a method of forming a multi-layer floor covering according to claim 13. Preferred features are defined in the dependent claims.

### BRIEF DESCRIPTION OF THE DRAWINGS

The features of the exemplary embodiments of the present invention will be described with reference to the following drawings, where like elements are labeled similarly, and in which:
FIG. 1 is a cross-sectional view of the floor covering according to one embodiment of the present invention;
FIG. 2 is a cross-sectional view of the floor covering according to another embodiment of the present invention;
FIG. 3 is a cross-sectional view of the floor covering according to another embodiment of the present invention;

All drawings are schematic and not necessarily to scale. Parts given a reference numerical designation in one figure may be considered to be the same parts where they appear in other figures without a numerical designation for brevity unless specifically labeled with a different part number and described herein.

### DETAILED DESCRIPTION

The present invention is directed to floor coverings comprising a substrate and an abrasion resistant coating layer. The abrasion resistant coating layer may comprise coating matrix and abrasion resistant particles. The coating matrix may be a curable coating composition comprising a binder. According to some embodiments, the binder may comprise acrylate-functional compounds and the abrasion resistant particles comprise a mixture of diamond particles and second abrasion resistant particles.

According to some embodiments of the present invention, the binder may comprise resin selected from acrylate-functional polymer, acrylate-functional oligomer, acrylate-functional monomer, and combinations thereof. The acrylate-functional polymer may include polyester acrylate, polyurethane acrylate, polyether acrylate, polysiloxane acrylate, polyolefin acrylate, and combinations thereof.

In some embodiments, the polyester acrylate according to the present invention may be a linear or branched polymer having at least one acrylate or (meth)acrylate functional group. In some embodiments, the polyester acrylate of the present invention has at least 1 to 10 free acrylate groups, (meth)acrylate groups, or a combination thereof.

In some embodiments, the polyester acrylate has an acrylate functionality The polyester acrylate may be the reaction product of polyester polyol and an carboxylic acid functional acrylate compound such as acrylic acid, (meth)acrylic acid, or a combination thereof at a OH:COOH ratio of about 1:1. The polyester polyol may be a polyester diol having two hydroxyl groups present at terminal end of the polyester chain. In some embodiments, the polyester polyol may have a hydroxyl functionality ranging from 3 to 9, wherein the free hydroxyl groups are present at the terminal ends of the polyester chain or along the backbone of the polyester chain.

In non-limiting embodiments, the polyester polyol may be the reaction product of a hydroxyl-functional compound and a carboxylic acid functional compound. The hydroxyl-functional compound is present in a stoichiometric excess to the carboxylic-acid compound. In some embodiments the hydroxyl-functional compound is a polyol, such a diol or a tri-functional or higher polyol (e.g. triol, tetrol, etc.). In some embodiments the polyol may be aromatic, cycloaliphatic, aliphatic, or a combination thereof. In some embodiments the carboxylic acid-functional compound is dicarboxylic acid, a polycarboxylic acid, or a combination thereof. In some embodiments, the dicarboxylic acid and polycarboxylic acid may be aliphatic, cycloaliphatic, aromatic.

In some embodiments the diol may be selected from alkylene glycols, such as ethylene glycol, propylene glycol, diethylene glycol, dipropylene glycol, triethylene glycol, tripropylene glycol, hexylene glycol, polyethylene glycol, polypropylene glycol and neopentyl glycol; hydrogenated bisphenol A; cyclohexanediol; propanediols including 1,2-propanediol, 1,3-propanediol, butyl ethyl propanediol, 2-methyl-1,3-propanediol, and 2-ethyl-2-butyl-1,3-propanediol; butanediols including 1,4-butanediol, 1,3-butanediol, and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-caprolactone and ethylene glycol); hydroxy-alkylated bisphenols; polyether glycols, for example, poly(oxytetramethylene) glycol. In some embodiments, the tri-functional or higher polyol may be selected from trimethylol propane, pentaerythritol, di-pentaerythritol, trimethylol ethane, trimethylol butane, dimethylol cyclohexane, glycerol and the like.

In some embodiments the dicarboxylic acid may be selected from adipic acid, azelaic acid, sebacic acid, succinic acid, glutaric acid, decanoic diacid, dodecanoic diacid, phthalic acid, isophthalic acid, 5-tert-butylisophthalic acid, tetrahydrophthalic acid, terephthalic acid, hexahydrophthalic acid, methylhexahydrophthalic acid, dimethyl terephthalate, 2,5-furandicarboxylic acid, 2,3-furandicarboxylic acid, 2,4-furandicarboxylic acid, 3,4-furandicarboxylic acid, 2,3,5-furantricarboxylic acid, 2,3,4,5-furantetracarboxylic acid, cyclohexane dicarboxylic acid, chlorendic anhydride, 1,3-cyclohexane dicarboxylic acid, 1,4-cyclohexane dicarboxylic acid, and anhydrides thereof, and mixtures thereof. In some embodiments the polycarboxylic acid may be selected from trimellitic acid and anhydrides thereof.

In some embodiments, the acrylate-functional polyurethane according to the present invention may be a linear or branched polymer having at least one functional group selected from an acrylate group or a (meth)acrylate group. In some embodiments, the acrylate-functional polyurethane may has at least 2 to 9 functional groups selected from an acrylate group, a (meth)acrylate group, or a combination thereof. In some embodiments, the acrylate-functional polyurethane has between 2 and 4 functional groups selected from an acrylate group, (meth)acrylate group, or a combination thereof.

In some embodiments, the acrylate functional polyurethane may be the reaction product of a high molecular weight polyol and diisocyanate, polyisocyanate, or a combination thereof. The high molecular weight polyol may be selected from polyester polyol, polyether polyol, polyolefin polyol, and a combination thereof - the high molecular weight polyol having a hydroxyl functionality ranging from 3 to 9.

In some embodiments, the polyester polyol used to create the acrylate-functional polyurethane is the same as used to create the acrylate functional polyester. In some embodiments, the polyether polyol may be selected from polyethylene oxide, polypropylene oxide, polytetrahydrofuran, and mixtures and copolymers thereof.

The high molecular weight polyol may be reacted with polyisocyanate, such as a diisocyanate, a tri-functional isocyanate (e.g. isocyanurate), higher functional polyisocyanates, or a combination thereof in an NCO:OH ratio ranging from about 2:1 to 4:1. The polyisocyanate may be selected from isophorone diisocyanate, 4,4'-dicyclohexylmethane-diisocyanate, and trimethyl-hexamethylene-diisocyanate, 1,6 hexamethylene diisocyanate, 2,2,4-trimethylhexamethylene diisocyanate, octadecylene diisocyanate and 1,4 cyclohexylene diisocyanate. toluene diisocyanate; methylenediphenyl diisocyanate; tetra methylxylene diisocyanate, and isocyanurates, biurets, allophanates thereof, as well as mixtures thereof. The resulting reaction product is an isocyanate-terminated prepolymer.

The isocyanate-terminated prepolymer is then reacted with hydroxyl-functional acrylate compound in an NCO:OH ratio of about 1:1 to yield an acrylate or (meth)acrylate functional polyurethane. The hydroxyl-functional acrylate compounds may include hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, aminoethyl acrylate, and aminoethyl methacrylate, and a combination thereof.

According to some embodiments of the present invention, the binder may comprise acrylate-functional oligomers that include mono-functional oligomers, di-functional oligomers, tri-functional oligomers, tetra-functional oligomers, penta-functional oligomers, and combinations thereof.

In some non-limiting embodiments the mono-functional oligomers may be selected from alkoxylated tetrahydrofurfuryl acrylate; alkoxylated tetrahydrofurfuryl methylacrylate; alkoxylated tetrahydrofurfuryl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof. The alkoxylation may be performed using ethylene oxide, propylene oxide, butylene oxide, or mixtures thereof. In some embodiments the degree of alkoxylation ranges from about 2 to 10. In some embodiments, the degree of alkoxylation ranges from about 4 to 6.

In some non-limiting embodiments the di-functional oligomers may be selected from ethylene glycol diacrylate, propylene glycol diacrylate, diethylene glycol diacrylate, dipropylene glycol diacrylate, triethylene glycol diacrylate, tripropylene glycol diacrylate, polyethylene glycol diacrylate, polypropylene glycol diacrylate, ethoxylated bisphenol A diacrylate, bisphenol A diglycidyl ether diacrylate, resorcinol diglycidyl ether diacrylate, 1,3-propanediol diacrylate, 1,4-butanediol diacrylate, 1,5-pentanediol diacrylate, 1,6-hexanediol diacrylate, neopentyl glycol diacrylate, cyclohexane dimethanol diacrylate, ethoxylated neopentyl glycol diacrylate, propoxylated neopentyl glycol diacrylate, ethoxylated cyclohexanedimethanol diacrylate, propoxylated cyclohexanedimethanol diacrylate, and mixtures thereof.

In some non-limiting embodiments, the tri-functional oligomers may be selected from trimethylol propane triacrylate, isocyanurate triacrylate, glycerol triacrylate, ethoxylated trimethylolpropane triacrylate, propoxylated trimethylolpropane triacrylate, tris (2-hydroxyethyl) isocyanurate triacrylate, ethoxylated glycerol triacrylate, propoxylated glycerol triacrylate, pentaerythritol triacrylate, melamine triacrylates, and mixtures thereof.

In some non-limiting embodiments, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

Some embodiments of the present invention may further include acrylate functional monomers selected from alkyl acrylates having up to about 12 carbon atoms in the alkyl segment such as ethyl acrylate, butyl acrylate, 2-ethylhexyl acrylate, amyl acrylate, n-lauryl acrylate, nonyl acrylate, n-octyl acrylate, isooctyl acrylate, isodecyl acrylate, etc.; alkoxyalkyl acrylates such as methoxybutyl acrylate, ethoxyethyl acrylate, ethoxypropyl acrylate, etc.; hydroxyalkyl acrylates such as hydroxyethyl acrylate, hydroxybutyl acrylate, etc.; alkenyl acrylates such as trimethoxyallyloxymethyl acrylate, allyl acrylate, etc.; aralkyl acrylates such as phenoxyethyl acrylate, benzyl acrylate, etc.; cycloalkyl acrylates such as cyclohexyl acrylate, cyclopentyl acrylate, isobornyl acrylate, etc.; aminoalkyl acrylates such as diethylaminoethyl acrylate; cyanoalkyl acrylates such as cyanoethyl acrylate, cyanopropyl acrylate, etc.; carbamoyloxy alkyl acrylates such as 2-carbamoyloxyethyl acrylate, 2-carbamoyl-oxypropyl acrylate, N-methylcarbamoyloxyethyl acrylate, N-ethylcarbamoyloxymethyl acrylate, 2-(N-methylcarbamoyloxy)-ethyl acrylate, 2-(N-ethylcarbamoyloxy)ethyl acrylate, etc.; and the corresponding methacrylates. In some embodiments, the alkyl acrylates having up to about 12 carbon atoms in the alkyl segment may be used as a reactive solvent / diluent in the abrasions resistant coating layer.

The acrylate-functional monomers may include the binder may comprise resin selected from acrylate-functional polymer, acrylate-functional oligomer, acrylate-functional monomer, a

In some non-limiting embodiments, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

In some embodiments, the acrylate-functional monomer or oligomer is a silicone acrylate. Curable silicone acrylates are known and suitable silicone acrylates are disclosed, for example in U.S. Pat. 4,528,081 and U.S. Pat. 4,348,454. Suitable silicone acrylates include silicone acrylates having mono-, di-, and tri-acrylate moieties. Suitable silicone acrylates include, for example, Silcolease® UV RCA 170 and UV Poly 110, available from Blue Star Co. Ltd, China; and Silmer ACR D2, Silmer ACR Di-10, Silmer ACR Di-50 and Silmer ACR Di-100, available from Siltech.

The coating matrix may further comprise photoinitiator to facilitate UV curing of the curable coating composition. In some non-limiting embodiments, the photoinitiators may include a benzoin compound, an acetophenone compound, an acylphosphine oxide compound, a titanocene compound, a thioxanthone compound or a peroxide compound, or a photosensitizer such as an amine or a quinone. Specific examples photoinitiatiors include 1-hydroxycyclohexyl phenyl ketone, benzoin, benzoin methyl ether, benzoin ethyl ether, benzoin isopropyl ether, benzyl diphenyl sulfide, tetramethylthiuram monosulfide, azobisisobutyronitrile, dibenzyl, diacetyl and beta-chloroanthraquinone. In some embodiments, the photoinitators are water soluble alkylphenone photoinitiators.

The coating matrix may further comprise an amine synergist. In some embodiments, the amine synergist may include diethylaminoethyle methacrylate, dimethylaminoethyl methacrylate, N-N-bis(2-hydroxyethyl)-P-toluidine, Ethyl-4-dimethylamino benzoate, 2-Ethylhexyl 4-dimethylamino benzoate, as well as commercially available amine synergist, including Sartomer CN 371, CN373, CN383, CN384 and CN386; Allnex Ebecry P104 and Ebecry P115. The amine synergist may be present in the radiation curable coating composition by an amount ranging from about 1 wt.% to about 5 wt.%, preferably about 3 wt.%

The coating layer of the present invention includes abrasion resistant particles that help impart wear and scratch resistance to the overall coating layer. The improved wear and scratch resistance extends the life span of the floor covering. Examples of previous attempts to use abrasion resistant particles to improve wear and scratch resistance of flooring products include using only aluminum oxide particles. According to the present invention, the abrasion resistant particles include a combination of abrasion resistant particles, each exhibiting a Mohs hardness value ranging from 6 to 10 - including all integers therebetween, as measured on the Mohs scale of mineral hardness. In some embodiments, the abrasion resistant particles may be selected from diamond (Mohs value of 10), aluminum oxide (Mohs value of 9), topaz (Mohs value of 8), quartz (Mohs value of 7), nepheline syenite or feldspar (Mohs value of 6), and combinations thereof. The abrasion resistant particle may be a combination of a first abrasion resistant particle consisting of diamond particles and a second abrasion resistant particle having a Mohs value of less than 10. In some embodiments, the coating layer of the present invention may comprise an amount of abrasion resistant particle ranging from about 6 wt. % to about 25 wt. % based on the total weight of the coating layer. In some embodiments, the coating layer of the present invention may comprise an amount of abrasion resistant particle ranging from about 6 wt. % to about 12 wt. % based on the total weight of the coating layer.

According to some embodiments, the second abrasion resistant particle may be present relative to the diamond particle in a weight ratio ranging from about 1:1 to about 10:1. In some non-limiting embodiments, the second abrasion resistant particle is present relative to the diamond particle in a weight ratio of about 1:1. In some non-limiting embodiments, the second abrasion resistant particle is present relative to the diamond particle in a weight ratio of about 2:1. In some non-limiting embodiments, the second abrasion resistant particle is present relative to the diamond particle in a weight ratio of about 4:1. In some non-limiting embodiments, the second abrasion resistant particle is present relative to the diamond particle in a weight ratio of about 8:1. It has been found that coating layers comprising a mixture of diamond particles and second abrasion resistant particle of the present invention (e.g., aluminum oxide particles) exhibits similar abrasion resistance at much lower overall loading levels of abrasion resistant particles compared to coating layers comprising abrasion resistant particles of only aluminum oxide.

According to some embodiments, the abrasion resistant particle is a combination of diamond particle and aluminum oxide particles. According to some embodiments, the aluminum oxide particles may have a variety of particle sizes including a mixture of different sized diamond particles. In some non-limiting embodiments, the aluminum oxide particles of the present invention may have an average particle size that is selected from the range of about 2 µm to about 30 µm. In some non-limiting embodiments, the diamond particles of the present invention may have an average particle size that is selected from range of about 6 µm about 25 µm. The term "about" means +/- percentage change of 5%. In some embodiments, a mixture of aluminum oxide powder¹ may be selected that has particle sizes at 50% size distribution:
¹ Commercially available Microgrit WCA aluminum oxide powder

| Sample | Size (µm) at 50 % |
|---|---|
| 1 | 1.77 - 2.25 |
| 2 | 2.09 - 2.77 |
| 3 | 2.97 - 3.85 |
| 4 | 3.72 - 4.74 |
| 5 | 5.6 - 6.75 |
| 6 | 7.05 - 8.5 |
| 7 | 9.06 - 11.13 |
| 8 | 12.4 - 14.66 |
| 9 | 16.92 - 20.6 |
| 10 | 23.6 - 27.45 |

In some embodiments, a mixture of aluminum oxide powder² may be selected that has particle sizes at 50% size distribution:
² Commercially available Fujimi PWA aluminum oxide powder

| Sample | Size (µm) at 50 % |
|---|---|
| 11 | 3.1 ± 0.3 |
| 12 | 4.7 ± 0.4 |
| 13 | 6.4 ± 0.5 |
| 14 | 8.2 ± 0.6 |
| 15 | 10.2 ± 0.8 |
| 16 | 14.2 ± 1.1 |
| 17 | 17.4 ± 1.3 |
| 18 | 20.8 ± 1.5 |
| 19 | 25.5 ± 1.7 |
| 20 | 29.7 ± 20 |

In some embodiments, the abrasion resistant particle is a combination of diamond particle and feldspar particles. The feldspar particle may be present relative to the diamond particle in a weight ratio ranging from about 2:1 to about 5:1. In some non-limiting embodiments, the feldspar particle is present relative to the diamond particle in a weight ratio of about 4:1. In some non-limiting embodiments, the feldspar particle is present relative to the diamond particle in a weight ratio of about 2:1. In some non-limiting embodiments, the feldspar particles of the present invention may have an average particle size that is selected from the range of about 2 µm to about 30 µm - including all integers therebetween. It has been found that coating layers comprising a mixture of diamond particles and feldspar particles may exhibit similar abrasion resistance at much lower overall loading levels of abrasion resistant particles compared to coating layers comprising abrasion resistant particles of only feldspar.

According to some embodiments, the diamond particles selected for the coating layer may have a variety of particle sizes including a mixture of different sized diamond particles. However, according to some embodiments, the diamond particles have a narrow size distribution. According to this invention, the term narrow size distribution means a standard deviation that is no more than 35%, preferably less than 35%, of the average particle size for a given diamond particle blend or mixture. In some embodiments, the standard deviation is less than 25% based on the average particle size for a given diamond particle blend or mixture. In some embodiments, the standard deviation is less than 15% based on the average particle size for a given diamond particle blend or mixture.

In some non-limiting embodiments, the diamond particles of the present invention may have an average particle size that is selected from the range of about 2 µm to about 50 µm, preferably about 4 µm to 35 µm. In some non-limiting embodiments, the diamond particles of the present invention may have an average particle size that is selected from range of about 6 µm about 25 µm. The term "about" means +/- percentage change of 5%.

In some non-limiting embodiments of the present invention, the diamond particles may be a first mixture of diamond particles that has particle sizes ranging from about 6 µm to about 11 µm, preferably from about 6 µm to about 10 µm - including all integers therebetween and mixtures thereof. According to some embodiments, the first mixture of diamond particles may include diamond particles having an average particle size of about 6 µm, about 7 µm, about 8 µm, about 9 µm, about 10 µm, or 11 µm.

In some embodiments, the first mixture of diamond particles may have the following particle size distribution:

| | | | | | | | | | | |
|---|---|---|---|---|---|---|---|---|---|---|
| Distribution % | 10 | 20 | 30 | 40 | 50 | 60 | 70 | 80 | 90 | 100 |
| Size (µm) | 6.04 | 6.61 | 7.03 | 7.43 | 7.83 | 8.27 | 8.77 | 9.4 | 10.45 | 11.46 |

Wherein the average particle size is represented at the 50% distribution point (i.e. about 8 µm) and the standard deviation is about 1.7, making the standard deviation about 21% of the average particle size.

It is possible that the first mixture may contain diamond particle having particle sizes outside of the about 6 µm to about 10 µm range so long as the standard deviation for the first mixture is not greater than 35%, preferably less than 35%. In some embodiments, it is possible that the first mixture may contain diamond particle having particle sizes outside of the about 6 µm to about 10 µm range so long as the standard deviation for the first mixture is less than 25%, preferably less than 15%. In some embodiments, the first mixture may contain up to 4 wt. % of diamond particles having a particle size that is less than 6 µm. In some non-limiting embodiments, the first mixture may contain up to 4 wt. % of diamond particles having a particle size that is less than 6 µm. In some embodiments, the first mixture may contain up to 6.54 wt. % of diamond particles having a particle size that is greater than 11 µm.

In some non-limiting embodiments of the present invention, the diamond particles may be a second mixture of diamond particles that has particle sizes ranging from about 15 µm to about 30 µm, preferably about 15 µm to about 25 µm - including all integers therebetween and mixtures thereof. According to some embodiments, the second mixture of diamond particles may have an average particle size of about 15 µm, about 16 µm, about 17 µm, about 18 µm, about 19 µm, about 20 µm, about 21 µm, about 22 µm, about 23 µm, about 24 µm, or about 25 µm.

In some embodiments, the second mixture of diamond particles may have the following particle size distribution:

| | | | | | | | | | | |
|---|---|---|---|---|---|---|---|---|---|---|
| Distribution % | 10 | 20 | 30 | 40 | 50 | 60 | 70 | 80 | 90 | 100 |
| Size (µm) | 15.88 | 17.25 | 18.38 | 19.40 | 20.42 | 21.52 | 22.84 | 24.64 | 27.59 | 30.83 |

Wherein the average particle size is represented at the 50% distribution point (i.e. about 20 µm) and the standard deviation is about 4.4, making the standard deviation about 22% of the average particle size.

It is possible that the second mixture may contain diamond particles having a particle size outside of the 15 µm to 25 µm range so long as the standard deviation for the second mixture is not greater than 35%, preferably less than 35%. In some non-limiting embodiments, it is possible that the second mixture may contain diamond particles having a particle sizes outside of the 15 µm to 25 µm range so long as the standard deviation for the second mixture is less than 25%, preferably less than 15%. In some non-limiting embodiments, the second mixture may contain up to 3.25 wt. % of diamond particles having a particle size that is less than 15 µm. In some embodiments, the second mixture may contain up to 8 wt. % of diamond particles having a particle size that is greater than 30 µm.

The coating layer of the present invention may comprise the first abrasion resistant diamond particles in amount that ranges from about 1 wt. % to about 5 wt. %, a based on the total weight of the coating layer, preferably 2 wt. % to 4 wt. %. In some embodiments, the coating layer may comprise about 1.75 wt. % to about 3.7 wt.% of diamond particles. It has been discovered that the coating layer of the present invention may exhibit the desired scratch resistance and gloss retention properties when using abrasion resistant particles that consist of only diamond particles in the above recited amounts. It has also been found that exceeding diamond particle loading amounts of 5.5 wt. %, there may be an undesirable effect to the visual properties of the coating layer.

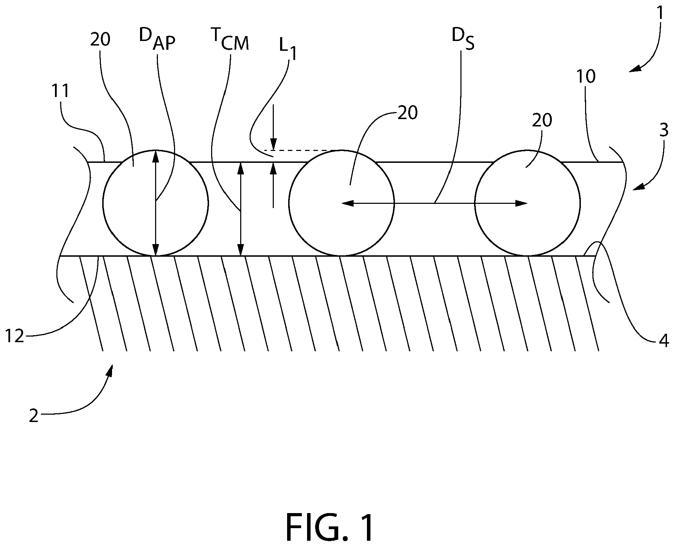

As shown in Figures 1-3, the floor covering 1 of the present invention includes a coating layer 3 and a substrate 2. The coating layer 3 comprises abrasion resistant particles 20 and coating matrix 10. The thickness of the coating layer may vary across the top surface of the coating layer based on the surface topography defined by the abrasion resistant particles 20 positioned within the coating matrix 10. The coating matrix has a top surface 11 and a bottom surface 12. The bottom surface 12 of the coating matrix 10 abuts the top surface 4 of the substrate 2, or in the case of multi-layer floor coverings, the top surface of the underneath coating layer (not pictured). The top surface 11 of the coating matrix 10 is the upward exposed face that is uninterrupted between protruding abrasion resistant particles 20 that are positioned in the coating matrix 10.

The average coating matrix thickness T_{CM} is the vertical distance measure between the top surface 11 and bottom surface 12 of the coating matrix 10. According to some embodiments, the average matrix coating thickness T_{CM} may range from about 4 µm to about 40 µm - including all integers therebetween. According to some embodiments, the average matrix coating thickness T_{CM} may range from about 6 µm to about 20 µm - including all integers therebetween. According to some embodiments, the average matrix coating thickness T_{CM} is 6 µm. According to some embodiments, the average matrix coating thickness T_{CM} is 18 µm.

The dimensions of the diamond particles and the coating matrix are selected such that a ratio of the average coating matrix thickness T_{CM} to average particle size D_{AP} of the diamond particles 20 (the TD ratio) ranges from 0.6:1 to 2:1. In some embodiments, the TD ratio of the average matrix coating thickness T_{CM} to the average particle size D_{AP} of the diamond particles 20 ranges from about 0.9:1 to 2:1.

In some embodiments of the present invention, the average particle size D_{AP} of the diamond particles 20 and the average coating matrix thickness T_{CM} may be outside of the previously discussed size ranges so long as, together, the average coating matrix thickness T_{CM} and the average particle size D_{AP} of the diamond particles 20 satisfy the TD ratio of 0.6:1 to 2:1, preferably from 0.9:1 to 2:1.

The TD ratio ranging from 0.6:1 to 2:1 provides that at least some of the diamond particles 20 may protrude from the top surface 11 of the coating matrix 10 by a first length L₁ when the TD ratio of coating matrix thickness T_{CM} to average particle size D_{AP} of diamond particles 20 ranges from 0.6:1 to 0.99:1. According to some embodiments the first length L₁ is a distance equal to about 1% to about 43% of the average coating matrix thickness T_{CM} - including all integers therebetween.

The specific distance of the first length L₁ will depend on the specific size of the diamond particles 20 as well as the average coating matrix thickness T_{CM}. However, in some embodiments the first length L₁ may ranges from about 0.2 µm to about 6 µm (based on diamond particles 20 that have an average particle size D_{AP} of about 20 µm). In alternative embodiments, the first length L₁ may range from 0.08 µm to about 2.5 µm (based on diamond particles 20 having an average particle size D_{AP} of about 8 µm).

Although not depicted by the figures, in some embodiments, the TD ratio ranging from 0.9:1 to 1.1:1 would provide for at least some of the diamond particles having a particle size about equal to the average coating matrix thickness. In such embodiments, the diamond particles are positioned within close proximity to the top surface of the coating matrix.

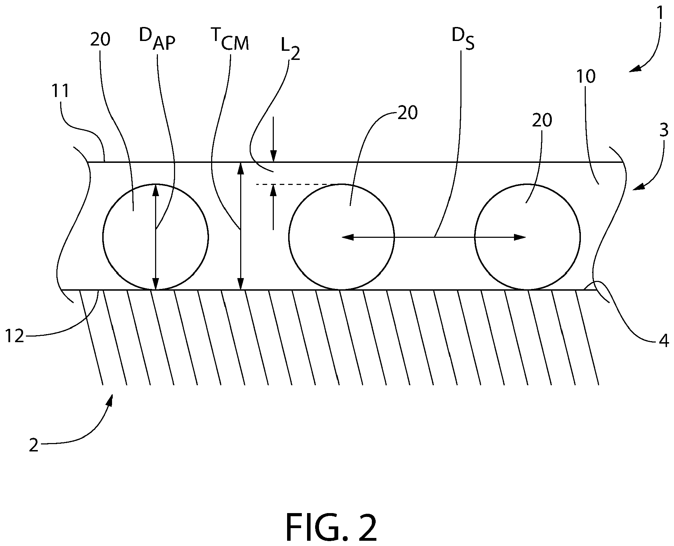

As depicted in Figure 2, using a TD ratio of about 1:1 to 2:1 would provide for at least some of the diamond particles 20 being fully encompassed by the coating matrix 10. The resulting coating layer 3 has the diamond particles 20 submerged under the top surface 11 of the coating matrix 10 by a second length L₂ - as measured from the top of the diamond particle 20 to the top surface 11 of the coating matrix 10. According to some embodiments the second length L₂ is a distance equal to about 1% to about 50% of the average coating matrix thickness T_{CM} - including all integers therebetween.

The specific distance of the second length L₂ will depend on the particle size of the diamond particle 20 as well as the average coating matrix thickness T_{CM}. However, in some embodiments the second length L₂ may range from about 0.2 µm to about 20 µm (based on diamond particles 20 have an average particle size D_{AP} of about 20 µm). In alternative embodiments, the second length L₂ may range from 0.08 µm to about 8 µm (based on diamond particles 20 having an average particle size D_{AP} of about 8 µm).

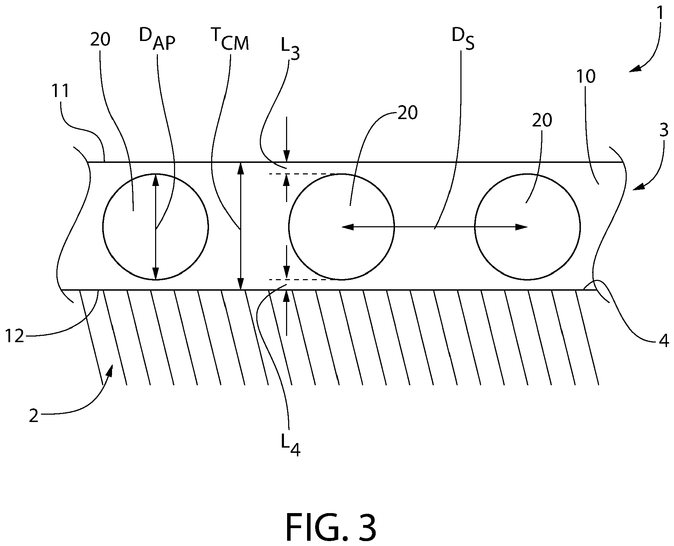

As depicted in Figure 3, some embodiments of the present invention provide that the UV curable coating matrix 10 may be partially cured during or immediately after the application of the coating layer 3. The partial curing secures the diamond particles 20 in place within the coating matrix 10 before the diamond particles 20 are able to completely settle and drop to the bottom surface 12 of the coating matrix 10. According to some embodiments, partially curing the coating matrix can create a third length L₃ and a fourth length L₄ - the third length L₃ measured from the top surface 11 of the coating matrix 10 to the top of the diamond particle 20 and the fourth length L₄ being measured from the bottom surface of the diamond particle 20 to the bottom surface 12 of the coating matrix 10.

The third length L₃ may be equal to 5% to 95% of the second length L₂ - including all integers therebetween. In some embodiments the third length L₃ is equal to about 50% of the second length L₂ The third length L₃ may be created without having to change the average particle size D_{AP} of the diamond particle 20 or the average coating matrix thickness T_{CM}. By partially curing the coating matrix 10 the downward movement of the diamond particle 20 caused by gravitational pull is stopped, and the diamond particle 20 is held in vertical position before it can fully settled to the bottom surface 12 of the coating matrix 10. Therefore, a corresponding gap is created between the bottom of the diamond particle 20 and the bottom surface 12 of the coating matrix 10 - the gap being represented by a fourth length L₄. The sum of the third length L₃ and fourth length L₄ is equal the second length L₂ for a given average particle size D_{AP} and average coating matrix thickness T_{CM}.

In some embodiments, the coating matrix may further comprise other additives and fillers, such as a surfactant, as pigments, tackifiers, surfactant, matting agents, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties. Suitable surfactants of the present invention include, but are not limited to, fluorinated alkyl esters, polyether modified polydimethylsiloxanes and fluorosurfactants, having the formula R_{f}CH₂CH₂O(CH₂CH₂O)ₓH, wherein R_{f}=F(CF₂CF₂)_{y}, x=0 to about 15, and y=1 to about 7. The surfactant may be present in the radiation curable adhesive composition by an amount ranging from about 0.5 wt.% to about 2 wt.%, preferably about 0.8 wt.%.

In some non-limiting embodiments, the coating layer may be produced according to the following master batch methodology. The coating matrix is comprised of the binder, dispersing agent, photoinitiator, and matting agent. The abrasion resistant particles comprise diamond particles. The components making up the binder are first combined and mixed together at room temperature with high speed agitation. For the purposes of the present application. the term high speed agitation means agitation with a blade at rotation speeds of at least 2,000 RPM. A dispersing agent may be added concurrently with the binder components or after the binder components have been blended together. The dispersing agents may be selected from acrylic block-copolymers, such as commercially available BYK Disperbyk 2008, Disperbyk 2155, Disperbyk 145 and Disperbyk 185, Lubrizol Solsperse 41000 and Solsperse 71000, and may be present in the coating layer by an amount ranging from 0.1 wt. % to 1 wt. %.

Next, the photoinitiator is slowly added at room temperature. In some alternative embodiments, the photoinitiator may be added at 45°C with high speed agitation. Once the photoinitiator is entirely dissolved into the master batch mixture, matting agents and the abrasion resistant particles may be added. The matting agent and abrasion resistant particles may be added to the master batch as the final ingredients to the blend of coating matrix and diamond particles. The matting agent and abrasion resistant particles should be added slowly to avoid a powder layer from forming and floating on top of coating matrix. Once added, the binder, dispersing agent, photoinitiator, matting agent, and abrasion resistant particles are mixed with high speed agitation for a period ranging from about 5 to about 15 minutes, preferably about 10 minutes. During the agitations, the blade may be moved up and down to ensure proper mixing of the ingredients in the master batch. The temperature of the master batch may increase during agitation, therefore to prevent premature thermal curing of the binder, the master batch may be cooled during agitation.

The fully blended coating matrix and diamond particles have a viscosity ranging from about 600 cPs to about 1300 cPs at room temperature (74 °F) as measured by a Brookfield Viscometer using spindle #6 at 100 RPM. In some embodiments of the present invention, the viscosity allows the blend of coating matrix and diamond particles to be applied to a substrate by roll coating at room temperature. The substrates may selected from linoleum tile, ceramic tile, natural wood planks, engineered wood planks, vinyl tile - such as luxury vinyl tile ("LVT"), and resilient sheet - such as homogenous or heterogeneous commercial resilient sheets and residential resilient sheets. After applying the blend of coating matrix and diamond particles to the substrate, the blend is exposed to UV radiation in air or a nitrogen environment.

The UV radiation includes UVA, UVB, UVC, and UVV sources. Non-limiting examples of UV partial cure radiation include UVA radiation of 0.189 J/cm²; UVB radiation of 0.163 J/cm2; UVC radiation of 0.01 J/cm²; and UVV radiation may be 0.092 J/cm². The pre-cure temperature may be 30°C - 40°C and the coating composition may be exposed to the UV radiation at a line speed ranging from about 25 to 75 FPM. Non-limiting examples of UV full cure include UVA radiation of 1.006 J/cm²; UVB radiation of 0.886 J/cm²; UVC radiation of 0.126 J/cm²; and UVV radiation may be 0.504 J/cm². To fully cure, the coating composition may be exposed to the UV radiation at a line speed ranging from about 25 to 75 FPM. The delay between the pre-cure / partial cure and the full cure ranges from about 3 seconds to about 10 seconds. The fully cured coating matrix containing the diamond particles forms the coating layer of the floor covering.

As previously discussed, the UV curable coating matrix can be partially cured in some embodiments to prevent the abrasion resistant particles from fully settling within coating matrix. In some embodiments, the floor covering may contain two or three coating layers, each additional coating layer positioned on top of the previously applied coating layer. According to this embodiment, the additional coating layers may each be partially or fully cured before application of the subsequent coating layer to prevent the diamond particles of each coating layer from fully settling.

In some embodiments, the fully cured coating layer may have an average coating thickness that ranges from about 4 µm to about 40 µm. In some embodiments, the fully cured coating layer may have an average coating thickness that ranges from about 6 µm to about 20 µm. The specific thickness of the coating layer will depend on the average particle size of the abrasion resistant particles, as previously discussed.

As shown in Figures 1-3, some embodiments provide that after the coating layer 3 is applied to a substrate 2 and cured, the diamond particles 20 dispersed throughout the coating matrix 10 and spaced apart by an average separation distance Ds ranging from about 20 µm to about 75 µm - including all integers therebetween. In some embodiments the average separation distance Ds ranges from about 30 µm to about 65 µm. In some embodiments the average separation distance Ds ranges from about 32 µm to about 62 µm. The average separation distance Ds is measured between the centers of the adjacent particles.

According to the present invention, the TD ratio of average coating matrix thickness to average diamond particle size in combination with each low standard deviation in diamond particles sizes results in the coating layer having not only superior abrasion resistance but also superior retention on the surface finish of the coating layer, i.e. gloss. Specifically, there is little variation in the first length of the diamond particles that protrude from the top surface of the coating matrix. With such regularity, the amount of protrusion becomes much better controlled, thereby eliminating diamond particles that protrude too far from the coating matrix. With fewer diamond particles protruding too far from the coating matrix, there are less diamond particles that may be inadvertently dislodged from the coating matrix when a shear force (i.e. contact with a shoe) is applied to the coating layer during use, thereby limiting the likelihood that the abrasion resistance particles can be dislodged from the coating matrix, which would not only result in an uneven surface finish of the coating layer but the released abrasion resistant particles would being free to abrade the top surface of the coating matrix, thereby exacerbating the wear on the coating layer of the floor covering. The degree of premature abrasion resistant particle "pop-outs" would ultimately determine the wear rate of the coating layer, and, therefore, the floor covering. Abrasions resistant particles held firmly in place would create a more wear resistant floor covering than a floor covering where the abrasions resistant particles are popped out with relative ease and low shear force.

It has also been discovered that the particle size distribution provides for greater uniformity between particles within the coating matrix, thereby enhancing the structural integrity of the coating matrix within the coating layer. As a result when shear force is applied to the coating layer during use (e.g. contact with a shoe), the overall coating layer is less likely to deform and can better withstand abrasion and maintain the desired level of gloss. Surprisingly, it has been also found that utilizing a coating having a TD ratio equal to or lager than 1 and less than or equal to 2 improves abrasion resistance of the coated surface, unlike the prior art understanding that the abrasion resistant particles need to be protruded above the coating matrix surface to provide abrasion resistance.

The present invention has been disclosed in conjunction with UV curable coating compositions for illustration purposes only, and other curable coating compositions such as moisture curable compositions, 2K urethane coating compositions, epoxy coating compositions, and acrylic coating compositions, can be utilized.

The following examples were prepared in accordance with the present invention. The present invention is not limited to the examples described herein.

### EXAMPLES

### Experiment 1

A first set of tests were run to compare abrasion resistant coatings consisting of only aluminum oxide as the abrasion resistant particle as well as coatings that include abrasion resistant particles comprising a mixture of aluminum oxide and diamond. The abrasions resistant coatings were formed from coating matrixes having a Binder 1 comprising:
i. 25 grams of *Eternal EC6360* - polyester acrylate;
ii. 25 grams of *Allnex, EB8602* - urethane acrylate;
iii. 20 grams of tricyclodecane dimethanol diacrylate;
iv. 7 grams of trimethylolpropane triacrylate;
v. 10 grams of isobornyl acrylate;
vi. 9 grams of 2-phenoxythyl acrylate;
vii. 9 grams of hexanediol diacrylate; and
viii. 4 grams of *BlueStar Silicon, Scla UV RCA 170* - silicon acrylate.

The resin was mixed with high speed agitation at room temperature (74 °F) with the addition of 0.5736 grams of dispersing agent. The dispersing agent being BYK Disperbyk 2008 - an acrylic block-copolymer. Next 4.54 grams of amine synergist (Sartomer CN 371) and 5.91 grams of photoinitiator were added with high speed agitation until completely dissolved in the mixture. The photoinitiator includes 4.73 grams of diphenyl ketone and 1.18 grams of 1-hydroxy-cyclohexyl phenyl ketone.

Next, 21.41 grams of matting agent and the various amounts of abrasion resistant particles were added to each mixture of Examples 0-5. The matting agent includes the following:
i. 10.39 grams of Arkema, Orgasol 3501 EX D NAT1 - a polyamide 6/12;
ii. 3.37 grams of MicroPowder Fluo HT having a particle size ranging from 2 µm to 4 µm; and
iii. 7.65 grams of Evonik Acematt 3600 - silica.

The matting agent and abrasion resistance particles are added slowly, the mixture is agitated for at least 10 minutes with high speed agitation. The diamond particles and aluminum oxide particles are commercially available and obtained from Yusing Sino Crytal Micron, LTD and Micro Abrasives Corp, respectively. After the high speed agitation, the resulting curable coating composition is discharged from the mixer and applied to a substrate by roll coating. Once applied to the substrate, the curable coating composition is cured by UV radiation, thereby forming the coating layer of the floor covering.

**Table 1**

| | Ex. 0 | Ex. 1 | Ex. 2 | Ex. 3 | Ex. 4 | Ex. 5 |
|---|---|---|---|---|---|---|
| Binder 1 | 109 | 109 | 109 | 109 | 109 | 109 |
| Amine Synergist | 4.54 | 4.54 | 4.54 | 4.54 | 4.54 | 4.54 |
| Photoinitiator | 5.91 | 5.91 | 5.91 | 5.91 | 5.91 | 5.91 |
| Matting Agent | 21.41 | 21.41 | 21.41 | 21.41 | 21.41 | 21.41 |
| Dispersing Agent | 0.57 | 0.57 | 0.57 | 0.57 | 0.57 | 0.57 |
| Aluminum Oxide (20µm) | 0 | 0 | 0 | 0 | 5.45 | 0 |
| Aluminum Oxide (D50% 5.6µm - 6.75µm)³ | 0 | 5.45 | 10.68 | 35.42 | 0 | 10.9 |
| Diamond (6µm - 10µm)⁴ | 0 | 0 | 0 | 0 | 0 | 2.72 |
| Total (weight in grams) | 141.43 | 146.88 | 152.112 | 176.86 | 146.88 | 155.06 |
| Viscosity (cPs) | 850 | 890 | 1025 | 1750 | 950 | 915 |
| Note: * viscosity at room temperature (74 °F) as measured by a Brookfield Viscometer using spindle #6 at 100 RPM | | | | | | |
| ³ Aluminum oxide particles having a D50% of 5.6 µm - 6.75 µm; D94% MIN of 1.36 µm; and D3% MAX of 13.47 µm | | | | | | |
| ⁴ Diamond particles having an average particle size of 8 µm and a standard deviation of 1.7 | | | | | | |

Each coating layer was then abraded with 30 passes using 100 grit sand paper and applying 50 g weight. A Gardner abrasion tester was used, which is available from BYK Gardner. After abrading, each sample was visually compared by a panel of eight test evaluators for retention of desired visual appearance - wherein the rank of visual appearance was calculated on a scale of 0 to 1. A value of 0 being the best (i.e. having minimal abrasion) and a value of 1 being the worst (i.e. having visually significant and noticeable abrasions. The results are provided in Table 2.

**Table 2**

| Scratch Resistance and Gloss Retention | Ex. 0 | Ex. 1 | Ex. 2 | Ex. 3 | Ex. 4 | Ex. 5 |
|---|---|---|---|---|---|---|
| Flat White Tile | 0.97 | 0.75 | 0.77 | 0.57 | 0.59 | 0.26 |
| Lt Wood LVT | 0.87 | 0.55 | 0.98 | 0.71 | 0.62 | 0.34 |
| DK Wood LVT | 0.83 | 0.8 | 0.67 | 0.92 | 0.49 | 0.4 |
| Engineered Wood | 0.9 | 0.76 | 0.76 | 0.92 | 0.56 | 0.3 |
| Average | 0.89 | 0.72 | 0.8 | 0.78 | 0.57 | 0.33 |

The coating layers containing a mixture of aluminum oxide and diamond particles not only performed better than the coating layers containing aluminum oxide particles, but the diamond particles in combination with the aluminum oxide allowed for much less overall loading of aluminum oxide particles in the coating layer while still maintaining the desired abrasion resistance properties. Furthermore, the coating composition further comprising diamond particles not only provided significantly improved abrasion-resistance, but also without increasing the viscosity of the coating composition, making the coating composition easier to apply.

### Experiment 2

A second set of tests were run to compare abrasion resistant coatings comprising abrasion resistant particles of aluminum oxide and diamond at different loading amounts using a UV curable binder (PPG R30983MF - "Binder 2"), which is a UV curable acrylate coating binder, available from PPG. The abrasions resistant coatings contained the following abrasion resistant particle formulations:

**Table 3**

| | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| Binder 2 | 100 | 100 | 100 | 100 | 100 | 100 | 100 | 100 | 100 | 100 |
| Aluminum Oxide (20µm) | 0 | 4.0 | 8.0 | 12.0 | 16.0 | 24.0 | 4.0 | 4.0 | 8.0 | 8.0 |
| Diamond (6µm - 10µm)⁵ | 0 | 0 | 0 | 0 | 0 | 0 | 0 | 0 | 0 | 0 |
| Diamond (15µm - 25µm)⁶ | 0 | 0 | 0 | 0 | 0 | 0 | 4.0 | 2.0 | 2.0 | 1.0 |
| Total (weight in grams) | 100 | 104 | 108 | 112 | 116 | 124 | 108 | 112 | 116 | 124 |
| Viscosity (cPs) | 700 | 750 | 800 | 860 | 975 | 1250 | 775 | 750 | 825 | 800 |
| Note: * viscosity at room temperature (74 °F) as measured by a Brookfield Viscometer using spindle #6 at 100 RPM | | | | | | | | | | |
| ⁵ Diamond particles having an average particle size of 8 µm and a standard deviation of 1.7 | | | | | | | | | | |
| ⁶ Diamond particles having an average particle size of 20 µm and a standard deviation of 4.4 | | | | | | | | | | |

Each coating layer was then abraded with 30 passes using 100 grit sand paper and applying 2.1 pound weight. After abrading, each sample was compared for retention of desired visual appearance - wherein the rank of visual appearance was calculated on a scale of 0 to 1. A value of 0 being the best and a value of 1 being the worst. The results are provided in Table 4.

**Table 4**

| Scratch Resistance and Gloss Retention | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| Homogenous Resilient Commercial Vinyl Sheet | 0.97 | 0.79 | 0.91 | 0.66 | 0.74 | 0.48 | 0.41 | 0.29 | 0.36 | 0.51 |

The coating layers containing a combination of aluminum oxide particles and diamond particles not only performed better than the coating layers containing only aluminum oxide particles, but the diamond particles allowed for much less overall loading the aluminum oxide particles in the coating layer. Furthermore, for example, Example 12 demonstrates that the combination of aluminum oxide particles with diamond particles provided for superior abrasion resistance and gloss retention when relatively less aluminum oxide particles were used relative to other aluminum oxide / diamond particle combinations - thereby providing superior coating performance at less overall loading amounts of abrasion resistant particles.

### Experiment 3

A third set of tests were run to compare abrasion resistant coating layers comprising abrasion resistant particles of nepheline syenite ("feldspar") and abrasion resistant coating layers comprising abrasion resistant particles of feldspar and diamond. The feldspar has a Mohs Hardness of 6 and the diamond has a Mohs Hardness of 10. Each coating layer of the floor covering being a medium gloss ("MG") coating layer. The abrasions resistant coatings were formed from coating matrixes having a Binder 3 comprising:
i. 17.5 grams of *Eternal EC6360* - polyester acrylate;
ii. 32.5 grams of *Allnex, EB8602* - urethane acrylate;
iii. 20 grams of tricyclodecane dimethanol diacrylate;
iv. 7 grams of trimethylolpropane triacrylate;
v. 10 grams of isobornyl acrylate;
vi. 9 grams of 2-phenoxythyl acrylate;
vii. 9 grams of hexanediol diacrylate; and
viii. 2 grams of BlueStar Silicon, Scla UV RCA 170 - silicon acrylate.

The resin was mixed with high speed agitation at room temperature (74 °F) with the addition of 0.8025 of dispersing agent. The dispersing agent being BYK Disperbyk 2008 - an acrylic block-copolymer. Next 4.46 grams of amine synergist (Sartomer CN 371) and 5.8 grams of photoinitiator were added with high speed agitation until completely dissolved in the mixture. The photoinitiator includes 4.64 grams of diphenyl ketone and 1.16 grams of 1-hydroxycyclohexyl phenyl ketone. The photoinitiator may be added at room temperature of 45 °C with the aid of high speed agitation.

Next, 5.4 grams of matting agent and the various amounts of abrasion resistant particles were added to each mixture of Examples 0-6. The matting agent includes the following:
i. 2.39 grams of Arkema, Orgasol 3501 EX D NAT1 - a polyamide 6/12; and
ii. 3.01 grams of MicroPowder Polyfluo 523 XF having a particle size ranging from 3 µm to 6 µm.

The matting agent and abrasion resistance particles are added slowly, the mixture is agitated for at least 10 minutes with high speed agitation in accordance with the amounts set forth in Examples 15-18 shown in Table 5. After the high speed agitation, the resulting curable coating composition is discharged from the mixer and applied to a substrate by roll coating to a thickness of about 6 µm. Once applied to the substrate, the curable coating composition is cured by UV radiation, thereby forming the MG coating layers of the floor covering.

**Table 5**

| | Ex. 16 | Ex. 17 |
|---|---|---|
| Binder 2 | 107 | 107 |
| Amine Synergist | 4.46 | 4.46 |
| Photoinitiator | 5.8 | 5.8 |
| Matting Agent | 5.4 | 5.4 |
| Dispersing Agent | 0.8025 | 0.8025 |
| Diamond (6µm - 10µm)⁷ | 0.0 | 5.35 |
| Feldspar Particle⁸ | 10.7 | 10.7 |
| Total | 134.17 | 139.52 |
| ⁷ Diamond particles having an average particle size of 8 µm and a standard deviation of 1.7 | | |
| ⁸ Commercially available Minex 3 from Unimin | | |

The cured MG coating layers were tested with a Gardner Abrasion tester, available from BYK Gardner, for the level of gloss retained using 100 grit sand paper and applied weight of 2.1 pound with 30 passes. Each sample as analyzed for percentage of gloss retention and Δb color change value. The results are provided in Table 6.

**Table 6**

| | Gloss Retention % | Δb Color Value |
|---|---|---|
| Ex. 16 | 36 | 1.27 |
| Ex. 17 | 94 | 1.95 |

According to Chart 1, each of the MG coating layers exhibit a gloss retention after the scratch test of at least 70%. The gloss retention begins to worsen as the amount of diamond particles becomes greater than 6 wt. %. Furthermore, as shown in Chart 2, the color value - as represented by Δb value - increases with corresponding increases in the amount of diamond particles in the MG coating layer. For the purposes of this invention, it is desirable that the color Δb value remain as low as possible because higher Δb values result in a MG coating layer having a yellow appearance. Therefore, it has been discovered that at diamond particle loading amounts ranging between 2 wt. % and under 6 wt. % - preferably 5.5 wt. % - the resulting MG coating layer not only exhibits desirable abrasion resistance and gloss retention properties, but also will not exhibit a color Δb value that interferes with the desired aesthetic appearance of the MG coating layer.

*Delta b* (Δb) or difference in b values between the control and a sample indicates the degree of yellowing. The degree of yellowing is measured by use of a calorimeter that measures tristimulas color values of 'a', 'b', and 'L', where the color coordinates are designated as +a (red), -a (green), +b (yellow), -b (blue), +L (white), and -L (black).

### Experiment 4

A fourth set of tests were run to compare different loading amounts of the diamond particles within the coating layer of the floor covering - the coating layer being a low gloss ("LG") coating layer. The LG abrasions resistant coatings were formed from coating matrixes having a Binder 4 comprising:
i. 25 grams of *Eternal EC6360* - polyester acrylate;
ii. 25 grams of *Allnex, EB8602* - urethane acrylate;
iii. 20 grams of tricyclodecane dimethanol diacrylate;
iv. 7 grams of trimethylolpropane triacrylate;
v. 10 grams of isobornyl acrylate;
vi. 9 grams of 2-phenoxythyl acrylate;
vii. 9 grams of hexanediol diacrylate; and
viii. 3 grams of BlueStar Silicon, Scla UV RCA 170 - silicon acrylate.

The resin was mixed with high speed agitation at room temperature (74 °F) with the addition of 1.3266 grams of dispersing agent. The dispersing agent being BYK Disperbyk 2008 - an acrylic block-copolymer. Next 4.5 grams of amine synergist (Sartomer CN 371) and 5.86 grams of photoinitiator were added with high speed agitation until completely dissolved in the mixture. The photoinitiator includes 4.5 grams of diphenyl ketone and 1.17 grams of 1-hydroxycyclohexyl phenyl ketone.

Next, 20.21 grams of matting agent and the various amounts of abrasion resistant particles were added to each mixture of Examples 0-7. The matting agent includes the following:
i. 10.29 grams of Arkema, Orgasol 3501 EX D NAT1 - a polyamide 6/12;
ii. 3.03 grams of MicroPowder Fluo HT having a particle size ranging from 2 µm to 4 µm; and
iii. 6.89 grams of Evonik Acematt 3600 - silica.

The matting agent and abrasion resistance particles are added slowly, the mixture is agitated for at least 10 minutes with high speed agitation in accordance with the amounts set forth in Examples 19-21 shown in Table 6. After the high speed agitation, the resulting curable coating composition is discharged from the mixer and applied to a substrate by roll coating to a thickness of 6 µm. Once applied to the substrate, the curable coating composition is cured by UV radiation, thereby forming the LG coating layer of the floor covering.

**Table 7**

| | Ex. 18 | Ex. 19 |
|---|---|---|
| Binder 2 | 108 | 108 |
| Amine Synergist | 4.50 | 4.50 |
| Photoinitiator | 5.86 | 5.86 |
| Matting Agent | 20.21 | 20.21 |
| Dispersing Agent | 1.3266 | 1.3266 |
| Feldspar | 10.8 | 10.8 |
| Diamond (6µm - 10µm)³ | 0.0 | 5.4 |
| Amount of Diamond | 0% | 3.7% |
| Total | 150.7 | 156.10 |
| ⁹ Diamond particles having an average particle size of 8 µm and a standard deviation of 1.7 | | |

The cured LG coating layers were then abraded with 100 grit abrading paper with 30 passes. Each sample as analyzed for percentage of gloss retention and Δb color change value. The results are provided in Table 8.

**Table 8**

| | Gloss Retention % | Δb Color Value |
|---|---|---|
| Ex. 18 | 64 | 0.9 |
| Ex. 19 | 96 | 1.7 |

### Experiment 5

A fifth set of tests were run to compare different TD ratios of coating matrix thickness to average size of diamond particles. The coating matrix of Experiment 5 is in accordance with the compositions described in the present invention. The fourth set of tests further compares the different average particle spacing Ts between diamond particles within the coating layer. Each coating layer was prepared according to the high agitation blending previously discussed and applied to a substrate by roll coating. The coating layer was then cured with UV radiation and abraded with 100 grit abrading paper with 30 passes. After abrading, each sample was compared for retention of desired visual appearance - wherein the rank of visual appearance was calculated on a scale of 0 to 1. A value of 0 being the best having minimal abrasion, and a value of 1 being the worst having visually significant and noticeable abrasions. The results are provided in Table 9.

**Table 9**

| | Ex. 20 | Ex. 21 | Ex. 22 | Ex. 23 | Ex. 24 | Ex. 25 | Ex. 26 |
|---|---|---|---|---|---|---|---|
| Diamond (6µm - 10µm)¹⁰ | 3.7 wt. % | 3.7 wt. % | 3.7 wt. % | 3.7 wt. % | 3.7 wt. % | 3.7 wt. % | 3.7 wt. % |
| Coating Matrix Thickness | 3.7 µm | 5.7 µm | 6.9 µm | 9.4 µm | 12.2 µm | 16.0 µm | 20.5 µm |
| TD Ratio of T_{CM} : D_{AP} | 0.46 : 1 | 0.72 : 1 | 0.86 : 1 | 1.18 : 1 | 1.53 : 1 | 2 : 1 | 2.56 : 1 |
| T_{S} - Average Particle Separation Distance | 77 µm | 62 µm | 57 µm | 49 µm | 43 µm | 37 µm | N/A¹¹ |
| Scratch Resistance and Gloss Retention | 0.92 | 0.63 | 0.51 | 0.41 | 0.44 | 0.60 | N/A¹² |

The coating layers produced using a TD ratio of average coating matrix thickness to average particle size of the diamond particles within the range of 0.6:1 to 2:1 resulted in a coating layer exhibiting superior abrasion resistance and gloss retention as well as provided sufficient operability in handling and applying the coating layer to the substrate as compared to coating layers produced using a TD ratio outside of the range of 0.6:1 to 2:1.
¹⁰ Diamond particles having an average particle size of 8 µm and a standard deviation of 1.7
¹¹ Using a TD ratio of 2.56 : 1 resulted in difficulty in handling and applying the coating layer to the substrate by roll coating
¹² Using a TD ratio of 2.56 : 1 resulted in difficulty in handling and applying the coating layer to the substrate by roll coating

### Experiment 6

A sixth set of tests were performed to demonstrate the multi-layer coating layers for the flooring composition by comparing different TD ratios of coating matrix thickness to average size of diamond particles as well as the different average particle spacing T_{S} between diamond particles within the coating layer. The coating matrix of Experiment 6 is in accordance with the compositions described in the present invention. Each example describes a single layer within the three-layered coating layer. Each of the single coating layers were produced according to the previously discussed master batch high agitation blending process. The first layer was applied directly to the substrate by roll coating and partially cured. The second and third subsequent layers were applied in the same manner and each individually partially cured before the subsequent layer was applied. The results are provided in Table 10.

**Table 10**

| | Ex. 27 | Ex. 28 |
|---|---|---|
| Diamond (6µm - 10µm)¹³ | 3.7 wt. % | 3.7 wt. % |
| Coating Matrix Thickness | 4.6 µm | 7.5 µm |
| TD Ratio of T_{CM} : D_{AP} | 0.58 : 1 | 0.94 : 1 |
| T_{S} - Average Particle Separation Distance | 70 µm | 55 µm |
| Scratch Resistance and Gloss Retention | 0.27 | 0.14 |

| | | |
|---|---|---|
| ¹³ Diamond particles having an average particle size of 8 µm and a standard deviation of 1.7 | | |

After fully curing the multi-layered coating layer, the top surface of the coating layer was abraded with 100 grit sanding paper using 30 passes with 2.1 pound weight applied. After abrading, each sample was compared for retention of desired visual appearance. After abrading, each sample was compared for retention of desired visual appearance - wherein the rank of visual appearance was calculated on a scale of 0 to 1. A value of 0 being the best having minimal abrasion, and a value of 1 being the worst having visually significant and noticeable abrasions.

## Claims

1. A floor covering comprising
a substrate, and
a coating layer comprising:
a coating matrix formed from a curable coating composition comprising a binder, wherein the coating matrix has an average coating matrix thickness; and an abrasion resistant particle comprising:
a mixture of first abrasion resistant particles and second abrasion particles, the first abrasion resistant particles having an average primary particle size and a narrow distribution of primary particle sizes, the narrow distribution of primary particle sizes having a standard deviation less than 35% of the primary average particle size;
wherein the first abrasion resistant particles are diamond particle and the second abrasion resistant particles are particles other than diamond particles and have a Mohs hardness value of at least 6 and the second abrasion resistant particles are present relative to the first abrasion resistant particles in a weight ratio ranging from 1:1 to 8:1;
wherein the substrate is selected from linoleum tile, ceramic tile, natural wood planks, engineered wood planks, vinyl tile, and resilient sheet;
wherein the coating matrix has a top surface and a bottom surface, wherein the top surface comprises an exposed surface; and
wherein the ratio of average coating matrix thickness to the average first particle size ranges from 0.6:1 to 2:1.

2. The floor covering of claim 1 wherein the coating layer comprises less than 12 wt. % of abrasion resistant particles based on the weight of the coating layer.

3. The floor covering of claim 2 wherein the coating layer comprises at least 6 wt. % of the abrasion resistant particles based on the weight of the coating layer.

4. The floor covering of claim 1 wherein the average coating matrix thickness ranges from about 4 µm to about 40 µm, and preferably from about 6 µm to about 20 µm.

5. The floor covering of claim 1 wherein the second abrasion resistant particles are aluminum oxide and the weight ratio ranges from about 1:1 to about 4:1, optionally wherein the abrasion resistant particles are present in the coating layer by an amount ranging from about 6 wt. % to about 10 wt. %.

6. The floor covering of claim 1 wherein the average coating matrix thickness is measured from a top surface of the coating matrix to a bottom surface of the coating matrix and the abrasion resistant particles protrude from the top surface of the coating matrix at a distance ranging from about 1% to about 50% of the coating matrix thickness.

7. The floor covering of claim 1 wherein the average coating matrix thickness is measured from a top surface of the coating matrix to a bottom surface of the coating matrix and the abrasion resistant particles are submerged beneath the top surface of the coating matrix at a distance that is about 1% to about 50% of the coating matrix thickness.

8. The floor covering of claim 1 wherein the average coating matrix thickness is measured from a top surface of the coating matrix to a bottom surface of the coating matrix and the abrasion resistant particles are submerged beneath the top surface of the coating matrix at a first distance that is about 1% to about 25% of the coating matrix thickness and the abrasion resistant particles are vertically offset from the bottom surface of the coating matrix by a second distance that is about 1% to about 25% of the coating matrix thickness.

9. A floor covering comprising
a substrate, and
a coating layer comprising
a coating matrix formed from a curable coating composition comprising a binder, the coating matrix comprising an average coating matrix thickness: and
abrasion resistant particles comprising:
first abrasion resistant particles having an average particle size ranging from 2 µm to 50 µm, and
second abrasion resistant particles that have a Mohs hardness value of at least 6;
wherein the first abrasion resistant particles are diamond particles and the second abrasion resistant particles are particles other than diamond, and wherein an average distance between two adjacently placed first abrasion resistant particles ranges of from 20 µm to 75 µm;
wherein the substrate is selected from linoleum tile, ceramic tile, natural wood planks, engineered wood planks, vinyl tile, and resilient sheet;
wherein the coating matrix has a top surface and a bottom surface, wherein the top surface comprises an exposed surface; andwherein the ratio of average coating matrix thickness to the average particle size ranges from 0.6:1 to 2:1.

10. The floor covering of claim 9 wherein the coating layer comprises 6 wt. % to 12 wt. % of abrasion resistant particles based on the weight of the coating layer.

11. The floor covering of claim 9 wherein the average coating matrix thickness ranges from 4 µm to 40 µm, and preferably from 6 µm to 20 µm.

12. The floor covering of claim 9 wherein the second abrasion resistant particles are aluminum oxide, or wherein the second abrasion resistant particles are feldspar.

13. A method of forming a multi-layer floor covering comprising:
a) Providing a first coating composition comprising a first curable binder and a first curing initiator and a second coating composition comprising a second curable binder and a second curing initiator;
b) applying a first layer of the first coating composition on a substrate, the first layer applied such that the first coating composition exhibits a first average coating thickness as measured from a top surface and a bottom surface of the first layer;
c) partially or fully curing the first coating composition;
d) applying a second layer of the second coating composition on the top surface of the first layer, the second layer applied such that the second coating composition exhibits a second average coating thickness as measured from a top surface and a bottom surface of the second layer;
e) partially or fully curing the second coating composition;
wherein at least one of the first and the second coating compositions comprises abrasion resistant particles that include diamond particles and second abrasion resistant particle having a Mohs hardness value of at least 6, the diamond particle having an average particle size and being present relative to the second abrasion resistant particles are particles other than diamond particles, wherein the first abrasion resistant particles and the second abrasion resistant particles are in a weight ratio ranging from about 1:1 to about 1:8;
wherein for each of the first and second coating compositions that contain the abrasion resistant particles, a ratio for each of the first average coating thickness and the second average coating thickness to the average particle size of the diamond particle ranges from 0.6:1 to 2:1;
wherein for each of the first and the second coating compositions that contain the abrasion resistant particles, the curing of the first and the second coating compositions results in the diamond particle being vertically offset from at least one of the respective bottom surfaces of the first and the second coating compositions by a length greater than zero.

## Patentansprüche

1. Bodenbelag, umfassend
ein Substrat und
eine Beschichtungsschicht, umfassend:
eine Beschichtungsmatrix, die aus einer härtbaren Beschichtungszusammensetzung gebildet ist, die ein Bindemittel umfasst, wobei die Beschichtungsmatrix eine durchschnittliche Dicke der Beschichtungsmatrix aufweist; und ein abriebfestes Partikel, umfassend:
eine Mischung aus ersten abriebfesten Partikeln und zweiten Abriebpartikeln, wobei die ersten abriebfesten Partikel eine durchschnittliche primäre Partikelgröße und eine enge Verteilung von primären Partikelgrößen aufweisen, wobei die enge Verteilung von primären Partikelgrößen eine Standardabweichung von weniger als 35% der primären durchschnittlichen Partikelgröße aufweist;
wobei die ersten abriebfesten Partikel Diamant-Partikel sind und die zweiten abriebfesten Partikel andere Partikel als Diamant-Partikel sind und einen Mohs'schen Härtewert von mindestens 6 aufweisen, und die zweiten abriebfesten Partikel relativ zu den ersten abriebfesten Partikeln in einem Gewichtsverhältnis anwesend sind, das von 1:1 bis 8:1 reicht;
wobei das Substrat aus Linoleumfliese, Keramikfliese, Naturholzdielen, Holzwerkstoffdielen, Vinylfliese und elastischer Platte ausgewählt ist;
wobei die Beschichtungsmatrix eine Deckfläche und eine untere Fläche aufweist, wobei die Deckfläche eine freiliegende Fläche umfasst; und
wobei das Verhältnis von durchschnittlicher Dicke der Beschichtungsmatrix zu der durchschnittlichen ersten Partikelgröße von ca. 0,6:1 bis ca. 2:1 reicht.

2. Bodenbelag nach Anspruch 1, wobei die Beschichtungsschicht weniger als 12 Gew.-% von abriebfesten Partikeln auf Basis des Gewichtes der Beschichtungsschicht umfasst.

3. Bodenbelag nach Anspruch 2, wobei die Beschichtungsschicht mindestens 6 Gew.-% der abriebfesten Partikel auf Basis des Gewichtes der Beschichtungsschicht umfasst.

4. Bodenbelag nach Anspruch 1, wobei die durchschnittliche Dicke der Beschichtungsmatrix von ca. 4 µm bis ca. 40 µm und vorzugsweise von ca. 6 µm bis ca. 20 µm reicht.

5. Bodenbelag nach Anspruch 1, wobei die zweiten abriebfesten Partikel Aluminiumoxid sind und das Gewichtsverhältnis von ca. 1:1 bis ca. 4:1 reicht, optional wobei die abriebfesten Partikel in der Beschichtungsschicht mit einer Menge anwesend sind, die von ca. 6 Gew.-% bis ca. 10 Gew.-% reicht.

6. Bodenbelag nach Anspruch 1, wobei die durchschnittliche Dicke der Beschichtungsmatrix ab einer Deckfläche der Beschichtungsmatrix zu einer unteren Fläche der Beschichtungsmatrix gemessen wird und die abriebfesten Partikel aus der Deckfläche der Beschichtungsmatrix in einer Distanz hervorstehen, die ca. 1% bis ca. 50% der Dicke der Beschichtungsmatrix beträgt.

7. Bodenbelag nach Anspruch 1, wobei die durchschnittliche Dicke der Beschichtungsmatrix ab einer Deckfläche der Beschichtungsmatrix zu einer unteren Fläche der Beschichtungsmatrix gemessen wird und die abriebfesten Partikel unterhalb der Deckfläche der Beschichtungsmatrix in einer Distanz versenkt sind, die ca. 1% bis ca. 50% der Dicke der Beschichtungsmatrix beträgt.

8. Bodenbelag nach Anspruch 1, wobei die durchschnittliche Dicke der Beschichtungsmatrix ab einer Deckfläche der Beschichtungsmatrix zu einer unteren Fläche der Beschichtungsmatrix gemessen wird und die abriebfesten Partikel unterhalb der Deckfläche der Beschichtungsmatrix in einer ersten Distanz versenkt sind, die ca. 1% bis ca. 25% der Dicke der Beschichtungsmatrix beträgt, und die abriebfesten Partikel ab der unteren Fläche der Beschichtungsmatrix um eine zweite Distanz vertikal versetzt sind, die ca. 1% bis ca. 25% der Dicke der Beschichtungsmatrix beträgt.

9. Bodenbelag, umfassend
ein Substrat und
eine Beschichtungsschicht, umfassend
eine Beschichtungsmatrix, die aus einer härtbaren Beschichtungszusammensetzung gebildet ist, die ein Bindemittel umfasst, wobei die Beschichtungsmatrix eine durchschnittliche Dicke der Beschichtungsmatrix umfasst; und
abriebfeste Partikel, umfassend:
erste abriebfeste Partikel, die eine durchschnittliche Partikelgröße aufweisen, die von 2 µm bis 50 µm reicht, und
zweite abriebfeste Partikel, die einen Mohs'schen Härtewert von mindestens 6 aufweisen;
wobei die ersten abriebfesten Partikel Diamant-Partikel sind und die zweiten abriebfesten Partikel andere Partikel als Diamant sind, und wobei eine durchschnittliche Distanz zwischen zwei nebeneinander platzierten ersten abriebfesten Partikeln von 20 µm bis 75 µm reicht;
wobei das Substrat aus Linoleumfliese, Keramikfliese, Naturholzdielen, Holzwerkstoffdielen, Vinylfliese und elastischer Platte ausgewählt ist;
wobei die Beschichtungsmatrix eine Deckfläche und eine untere Fläche aufweist, wobei die Deckfläche eine freiliegende Fläche umfasst; und
wobei das Verhältnis von durchschnittlicher Dicke der Beschichtungsmatrix zu der durchschnittlichen Partikelgröße von ca. 0,6:1 bis ca. 2:1 reicht.

10. Bodenbelag nach Anspruch 9, wobei die Beschichtungsschicht 6 Gew.-% bis 12 Gew.-% von abriebfesten Partikeln auf Basis des Gewichtes der Beschichtungsschicht umfasst.

11. Bodenbelag nach Anspruch 9, wobei die durchschnittliche Dicke der Beschichtungsmatrix von 4 µm bis 40 µm und vorzugsweise von 6 µm bis 20 µm reicht.

12. Bodenbelag nach Anspruch 9, wobei die zweiten abriebfesten Partikel Aluminiumoxid sind oder wobei die zweiten abriebfesten Partikel Feldspat sind.

13. Verfahren zur Bildung eines mehrschichtigen Bodenbelags, umfassend:
a) Bereitstellen einer ersten Beschichtungszusammensetzung, die ein erstes härtbares Bindemittel und einen ersten Härtungsinitiator umfasst, und einer zweiten Beschichtungszusammensetzung, die ein zweites härtbares Bindemittel und einen zweiten Härtungsinitiator umfasst;
b) Auftragen einer ersten Schicht der ersten Beschichtungszusammensetzung auf ein Substrat, wobei die erste Schicht derart aufgetragen wird, dass die erste Beschichtungszusammensetzung eine erste durchschnittliche Beschichtungsdicke wie von einer Deckfläche und einer unteren Fläche der ersten Schicht gemessen zur Schau stellt;
c) teilweises oder gänzliches Härten der ersten Beschichtungszusammensetzung;
d) Auftragen einer zweiten Schicht der zweiten Beschichtungszusammensetzung auf die Deckfläche der ersten Schicht, wobei die zweite Schicht derart aufgetragen wird, dass die zweite Beschichtungszusammensetzung eine zweite durchschnittliche Beschichtungsdicke wie von einer Deckfläche und einer unteren Fläche der zweiten Schicht gemessen zur Schau stellt; wobei die Deckfläche der zweiten Schicht eine freiliegende Fläche umfasst;
e) teilweises oder gänzliches Härten der zweiten Beschichtungszusammensetzung;
wobei mindestens die zweite Beschichtungszusammensetzung und optional die erste Beschichtungszusammensetzung abriebfeste Partikel umfassen, die Diamant-Partikel und zweite abriebfeste Partikel einschließen, die einen Mohs'schen Härtewert von mindestens 6 aufweisen, wobei das Diamant-Partikel eine durchschnittliche Partikelgröße aufweist und relativ zu den zweiten abriebfesten Partikeln anwesend ist, die andere Partikel als Diamant-Partikel sind, wobei die ersten abriebfesten Partikel und die zweiten abriebfesten Partikel in einem Gewichtsverhältnis sind, das von ca. 1:1 bis ca. 1:8 reicht;
wobei für jede der ersten und der zweiten Beschichtungszusammensetzung, welche die abriebfesten Partikel enthalten, ein Verhältnis für jede der ersten durchschnittlichen Beschichtungsdicke und der zweiten durchschnittlichen Beschichtungsdicke zur durchschnittlichen Partikelgröße des Diamant-Partikels von 0,6:1 bis 2:1 reicht;
wobei für jede der ersten und der zweiten Beschichtungszusammensetzung, welche die abriebfesten Partikel enthalten, die Härtung der ersten und der zweiten Beschichtungszusammensetzung zur Folge hat, dass das Diamant-Partikel von mindestens einer der jeweiligen unteren Flächen der ersten und der zweiten Beschichtungszusammensetzung um eine Länge größer als null vertikal versetzt sind; und
wobei das Substrat aus Linoleumfliese, Keramikfliese, Naturholzdielen, Holzwerkstoffdielen, Vinylfliese und elastischer Platte ausgewählt ist.

## Revendications

1. Revêtement de sol comprenant :
un substrat, et
une couche de revêtement comprenant :
une matrice de revêtement formée à partir d'une composition de revêtement durcissable comprenant un liant, dans lequel la matrice de revêtement a une épaisseur moyenne de matrice de revêtement ; et une particule résistante à l'abrasion comportant :
un mélange de premières particules résistantes à l'abrasion et de deuxièmes particules résistantes à l'abrasion, les premières particules résistantes à l'abrasion ayant une taille particulaire primaire moyenne et une distribution étroite de tailles particulaires primaires, la distribution étroite des tailles particulaires primaires affichant un écart type inférieur à 35 % par rapport à la taille particulaire primaire moyenne ;
dans lequel les premières particules résistantes à l'abrasion sont des particules diamantées et les deuxièmes particules résistantes à l'abrasion sont des particules autres que des particules diamantées et ont une valeur de dureté Mohs d'au moins 6 et les deuxièmes particules résistantes à l'abrasion sont présentes par rapport aux premières particules résistantes à l'abrasion selon un rapport pondéral de l'ordre de 1:1 à 8:1;
dans lequel le substrat est choisi parmi des tuiles de linoléum, des carreaux de céramique, des lames de bois naturel, des planches de bois contrecollé, des carreaux de vinyle et des feuilles résilientes ;
dans lequel la matrice de revêtement comporte une surface supérieure et une surface inférieure, dans lequel la surface supérieure comprend une surface exposée ; et
dans lequel le rapport entre l'épaisseur moyenne de la matrice de revêtement et la première taille particulaire moyenne est de l'ordre d'environ 0,6:1 à environ 2:1.

2. Revêtement de sol selon la revendication 1, dans lequel la couche de revêtement comprend moins de 12 % en poids de particules résistantes à l'abrasion en fonction du poids de la couche de revêtement.

3. Revêtement de sol selon la revendication 2, dans lequel la couche de revêtement comprend au moins 6 % en poids de particules résistantes à l'abrasion en fonction du poids de la couche de revêtement.

4. Revêtement de sol selon la revendication 1, dans lequel l'épaisseur moyenne de la matrice de revêtement est de l'ordre d'environ 4 µm à environ 40 µm, et de préférence de l'ordre d'environ 6 µm à environ 20 µm.

5. Revêtement de sol selon la revendication 1, dans lequel les deuxièmes particules résistantes à l'abrasion sont de l'oxyde d'aluminium et le rapport pondéral est de l'ordre d'environ 1:1 à environ 4:1, éventuellement dans lequel les particules résistantes à l'abrasion sont présentes dans la couche de revêtement selon une quantité comprise entre environ 6 % en poids et environ 10 % en poids.

6. Revêtement de sol selon la revendication 1, dans lequel l'épaisseur de la matrice de revêtement est mesurée à partir d'une surface supérieure de la matrice de revêtement jusqu'à une surface inférieure de la matrice de revêtement et les particules résistantes à l'abrasion font saillie de la surface supérieure de la matrice de revêtement à une distance de l'ordre d'environ 1 % à environ 50 % de l'épaisseur de la matrice de revêtement.

7. Revêtement de sol selon la revendication 1, dans lequel l'épaisseur moyenne de la matrice de revêtement est mesurée à partir d'une surface supérieure de la matrice de revêtement jusqu'à une surface inférieure de la matrice de revêtement et les particules résistantes à l'abrasion sont immergées sous la surface supérieure de la matrice de revêtement à une distance de l'ordre d'environ 1 % à environ 50 % de l'épaisseur de la matrice de revêtement.

8. Revêtement de sol selon la revendication 1, dans lequel l'épaisseur moyenne de la matrice de revêtement est mesurée à partir d'une surface supérieure de la matrice de revêtement jusqu'à une surface inférieure de la matrice de revêtement et les particules résistantes à l'abrasion sont immergées sous la surface supérieure de la matrice de revêtement à une première distance de l'ordre d'environ 1 % à environ 25 % de l'épaisseur de la matrice de revêtement, et les particules résistantes à l'abrasion sont verticalement décalées de la surface inférieure de la matrice de revêtement selon une deuxième distance de l'ordre d'environ 1 % à environ 25 % de l'épaisseur de la matrice de revêtement.

9. Revêtement de sol comprenant :
un substrat, et
une couche de revêtement comprenant :
une matrice de revêtement formée à partir d'une composition de revêtement durcissable comportant un liant, la matrice de revêtement ayant une épaisseur moyenne de matrice de revêtement : et
des particules résistantes à l'abrasion comportant :
des premières particules résistantes à l'abrasion ayant une taille particulaire moyenne de l'ordre de 2 µm à 50 µm, et
des deuxièmes particules résistantes à l'abrasion qui ont une valeur de dureté Mohs d'au moins 6 ;
dans lequel les premières particules résistantes à l'abrasion sont des particules diamantées et les deuxièmes particules résistantes à l'abrasion sont des particules autres que des particules diamantées, et dans lequel une distance moyenne entre deux premières particules résistantes à l'abrasion attenantes est de l'ordre de 20 µm à 75 µm ;
dans lequel le substrat est choisi parmi des tuiles de linoléum, des carreaux de céramique, des lames de bois naturel, des planches de bois contrecollé, des carreaux de vinyle et des feuilles résilientes ;
dans lequel la matrice de revêtement comporte une surface supérieure et une surface inférieure, dans lequel la surface supérieure comprend une surface exposée ; et dans lequel le rapport entre l'épaisseur moyenne de la matrice de revêtement et la taille particulaire moyenne est de l'ordre d'environ 0,6:1 à environ 2:1.

10. Revêtement de sol selon la revendication 9, dans lequel la couche de revêtement comprend 6 % en poids à 12 % en poids de particules résistantes à l'abrasion en fonction du poids de la couche de revêtement.

11. Revêtement de sol selon la revendication 9, dans lequel l'épaisseur moyenne de la matrice de revêtement est de l'ordre de 4 µm à 40 µm, et de préférence de 6 µm à 20 µm.

12. Revêtement de sol selon la revendication 9, dans lequel les deuxièmes particules résistantes à l'abrasion sont de l'oxyde d'aluminium, ou dans lequel les deuxièmes particules résistantes à l'abrasion sont du feldspath.

13. Procédé pour former un revêtement de sol multicouche consistant à :
a) fournir une première composition de revêtement comportant un premier liant durcissable et un premier initiateur de durcissement ainsi qu'une deuxième composition de revêtement comportant un deuxième liant durcissable et un deuxième initiateur de durcissement ;
b) appliquer une première couche de la première composition de revêtement sur un substrat, la première couche appliquée de sorte que la première composition de revêtement indique une première épaisseur de revêtement moyenne mesurée à partir d'une surface supérieure et d'une surface inférieure de la première couche ;
c) durcir partiellement ou totalement la première composition de revêtement ;
d) appliquer une deuxième couche de la deuxième composition de revêtement sur la surface supérieure de la première couche, la deuxième couche appliquée de sorte que la deuxième composition de revêtement indique une deuxième épaisseur de revêtement moyenne mesurée à partir d'une surface supérieure et d'une surface inférieure de la deuxième couche ; dans lequel la surface supérieure de la deuxième couche comprend une surface exposée ;
e) durcir partiellement ou totalement la deuxième composition de revêtement ;
dans lequel au moins la deuxième compositions de revêtement, et éventuellement la première composition de revêtement, comprend des particules résistantes à l'abrasion qui incluent des particules diamantées et des deuxièmes particules résistantes à l'abrasion ayant une valeur de dureté Mohs d'au moins 6, les particules diamantées ayant une taille particulaire moyenne et étant présentes par rapport aux deuxièmes particules résistantes à l'abrasion sont des particules autres que des particules diamantées, dans lequel les premières particules résistantes à l'abrasion et les deuxièmes particules résistantes à l'abrasion se situent dans un rapport pondéral de l'ordre d'environ 1:1 à environ 1:8 ;
dans lequel en ce qui concerne chacune de la première et de la deuxième compositions de revêtement qui contiennent les particules résistantes à l'abrasion, un ratio correspondant à chacune de la première épaisseur de revêtement moyenne et de la deuxième épaisseur de revêtement moyenne par rapport à la taille particulaire moyenne de la particule diamantée, est de l'ordre de 0,6:1 à 2:1;
dans lequel en ce qui concerne chacune de la première et de la deuxième compositions de revêtement qui contiennent les particules résistantes à l'abrasion, le durcissement de la première et de la deuxième compositions de revêtement donne lieu au décalage vertical des particules diamantées d'au moins une des surfaces inférieures respectives de la première et de la deuxième compositions de revêtement selon une longueur supérieure à zéro; et
dans lequel le substrat est choisi parmi des tuiles de linoléum, des carreaux de céramique, des lames de bois naturel, des planches de bois contrecollé, des carreaux de vinyle et des feuilles résilientes.
